# EUROPÄISCHE PATENTSCHRIFT

(11) **EP 3 213 394 B1**
(45) Veröffentlichungstag und Bekanntmachung des Hinweises auf die Patenterteilung: **04.12.2019**
(21) Anmeldenummer: 15781899.8
(22) Anmeldetag: 09.10.2015
(51) Int. Cl.: H02K 3/34

(54) **ISOLIERELEMENT FÜR DIE STATORWICKLUNG EINER ELEKTRISCHEN MASCHINE UND EINE ELEKTRISCHE MASCHINE**
ISOLATION ELEMENT FOR THE STATOR WINDING OF AN ELECTRCICAL MACHINE AND AN ELECTRCICAL MACHINE
ELEMENT D'ISOLATION POUR L'ENROULEMENT DU STATOR D'UNE MACHINE ÉLECTRIQUE ET UNE MACHINE ÉLECTRIQUE

(30) Priorität: 28.10.2014 DE 102014221939
(43) Veröffentlichungstag der Anmeldung: 06.09.2017
(73) Patentinhaber: SEG Automotive Germany GmbH, 70499 Stuttgart (DE)
(72) Erfinder: LANGE, Fabian, 30175 Hannover (DE); GREMMEL, Daniel, 31249 Hohenhameln (DE)
(74) Vertreter: Steinbauer, Florian
(86) Internationale Anmeldenummer: PCT/EP2015/073400
(87) Internationale Veröffentlichungsnummer: WO 2016/066402

(56) Entgegenhaltungen:
- EP-A1- 2 518 865
- EP-A2- 1 178 587
- EP-A2- 2 173 022
- DE-A1-102009 024 230
- DE-A1-102011 083 577
- US-A1- 2014 042 836

## Beschreibung

Die Erfindung betrifft ein Isolierelement für die Statorwicklung einer elektrischen Maschine nach dem Oberbegriff des Anspruchs 1 sowie eine elektrische Maschine gemäß dem Anspruch 12.

### Stand der Technik

Zur Herstellung elektrischer Maschinen, die als Generatoren oder Motoren einsetzbar sind, kann der Stator der elektrischen Maschine aus einem flachen Lamellenpaket durch Rundbiegen hergestellt werden. Diese Herstellungsweise kann als Flachpaket-Technologie bezeichnet werden, bei der die Wicklungen des Stators in das zunächst flache Lamellenpaket in die zwischen Zähnen ausgebildeten Nuten eingelegt werden. Das mit der Statorwicklung bestückte Flachpaket wird dann rund gebogen, wobei am Flachpaket einseitig vorhandene Überhänge in Nuten eingefügt werden, die sich an der gegenüberliegenden Seite des Flachpakets befinden.

Die Überhänge der Statorwicklung, die zunächst am Flachpaket einseitig überstehen, sind beim Rundbiegen des Stators und beim Einfügen in die Nuten mechanischen Beanspruchungen ausgesetzt, weshalb es erforderlich ist, dass insbesondere an den Überhängen der Statorwicklung eine mechanisch stabile elektrische Isolierung vorhanden ist. Eine elektrische Isolierung kann an den Überhängen durch ein aufgeklebtes Isoliermaterial hergestellt werden, welches durch thermische Aktivierung außen an den Überhängen der Statorwicklung verklebt werden kann. Eine derartige Applikation eines geklebten Isoliermaterials ist prozesstechnisch sehr aufwändig. Außerdem kann dabei eine gleichmäßige Haftung des Isoliermaterials an den Wicklungsdrähten der Überhänge problematisch sein. Aus der DE 10 2004 006 701 A1 und der DE 10 2007 036 313 A1 ist die oben angesprochene Flachpaket-Technologie bekannt, wonach der Stator einer elektrischen Maschine aus einem flachen Blechpaket durch Rundbiegen hergestellt wird. Auch aus der DE 10 2010 053 719 A1 ist die Herstellung eines Stators aus einem Flachpaket mit Wicklungsüberhängen bekannt Darüber hinaus zeigt die EP1178587, welche den nächstliegenden Stand der Technik repräsentiert, wie U-förmige Nutisolationen in der selben Nut aufeinander getürmt werden können.

### Offenbarung der Erfindung

Das erfindungsgemäße Isolierelement für die Statorwicklung einer elektrischen Maschine mit den Merkmalen des Anspruchs 1 kann mit seinen federelastischen Seitenschenkeln selbstklemmend auf wenigstens einen Wicklungsüberhang der Statorwicklung aufgesteckt werden. Das Isolierelement, das vorzugsweise aus einem elektrisch isolierenden Kunststoffmaterial besteht, erfordert keine weiteren Elemente, um den Wicklungsüberhang, der am Flachpaket und am rundgebogenen Stator übersteht, elektrisch gegenüber dem Stator zu isolieren und außerdem die Wicklungsdrähte des Wicklungsüberhangs vor einer mechanischen Beschädigung beim Rundbiegen des Flachpakets und beim Einfügen des jeweiligen Wicklungsüberhangs in eine Statornut zu schützen. Das Isolierelement ist einfach und kostengünstig herstellbar und außerdem einfach und damit entsprechend schnell an den jeweiligen Wicklungsüberhängen anbringbar.

Im Profil ist das Isolierelement im Wesentlichen U-förmig ausgebildet, sodass die beidseitigen Schenkel des U-Profils von einem die beiden Schenkel verbindenden Boden abragen, der vorzugsweise im Übergangsbereich vom Boden zum jeweiligen Schenkel verstärkt ist. Eine größere Materialstärke in diesem Übergangsbereich dient der Erhöhung der Biegesteifigkeit der Schenkel. Dadurch kann eine Vergrößerung der Klemmwirkung erreicht werden, sodass der Isolationsclip mit großer Haltekraft an den jeweiligen Wicklungsüberhängen selbstklemmend gehalten wird.

Das als Isolationsclip ausgeführte Isolierelement besitzt vorzugsweise an beiden Außenseiten des Bodens im Übergangsbereich zum jeweiligen Schenkel eine Aussparung, in die das freie Ende eines Schenkels eines in derselben Nut einliegenden Isolationsclips einfügbar sind. Die Wicklungsüberhänge werden nämlich in Nuten des Stators eingesetzt, in denen bereits Wicklungsdrähte mit einem Isolationsclip einliegen und dabei beispielsweise die Hälfte der Nut ausfüllen. Die Wicklungsüberhänge mit dem selbstklemmend angebrachten Isolationsclip werden dann in den verbleibenden Raum dieser Nuten eingesetzt, wobei sich eine Überlappung der Isolationsclips im Bereich der erwähnten Aussparung ergibt. Damit wird erreicht, dass eine optimale Isolierung der einliegenden Wicklungsdrähte in den Nuten erreicht wird, in denen Wicklungsüberhänge eingefügt werden. Außerdem ergibt sich dadurch eine definierte Positionierung des jeweiligen Wicklungsüberhangs in der zugehörigen Nut.

Der auf einen Wicklungsüberhang aufgesteckte Isolationsclip umgreift die in ihm einliegenden Wicklungsdrähte vorzugsweise selbstklemmend. Der Isolationsclip kann aber auch durch an den freien Enden der Schenkel angeordnete Halteelemente die einliegenden Wicklungsdrähte so umgreifen, dass eine von den Schenkeln des Isolationsclips ausgehende Klemmwirkung nicht zwingend erforderlich ist. Als Halteelement kann an jedem der beiden Schenkel des Isolationsclips ein Randvorsprung vorgesehen sein. Es können aber auch in anderer Weise verstärkte und gerundete Ränder ausgebildet sein, die die Haltefunktion des Isolationsclips unterstützen.

Ein gerundeter Rand am freien Ende eines Schenkels hat dabei den weiteren Vorteil, dass ein beschädigungsfreies Montieren der Isolationsclips an den Wicklungsüberhängen unterstützt wird. So kann dadurch auch eine Beschädigung des Lackdrahts von Wicklungsdrähten beim Montieren und/oder beim Biegevorgang des Flachpakets vermieden werden.

An den freien Schenkeln können im Winkel zueinander abstehende Stege ausgebildet sein, wodurch ein weiterer mechanischer Schutz der einliegenden Wicklungsdrähte erreicht wird.

Der Isolationsclip kann sehr vorteilhaft als Extrusionsteil aus elektrisch isolierendem Kunststoff hergestellt werden, wobei von einem im Wesentlichen U-förmigen Strang dann die Isolationsclips mit der jeweils gewünschten Länge abgeschnitten werden können.

Der Isolationsclip kann auch vorteilhaft aus einem elektrisch isolierenden Kunststoff mittels eines additiven Fertigungsverfahrens, z.B. mittels selektivem Lasersintern, Polyjet-Modeling oder Fused Deposition Modeling, hergestellt sein.

Das Isolierelement im Bereich eines Wicklungsüberhangs kann aus einem Isolationsclip in Kombination mit einer Isolierfolie bestehen, die um die Wicklungsdrähte gelegt ist und vom Isolationsclip an den Wicklungsdrähten festgeklemmt wird. Der Isolationsclip kann somit zusätzlich als Befestigungselement dienen, um beispielsweise ein Isolierpapier im Bereich der Wicklungsüberhänge als zusätzliche Isolierungsmaßnahme anbringen zu können.

Die Erfindung betrifft auch eine elektrische Maschine, bei der der Stator aus einem Flachpaket mit darin einliegender Statorwicklung und mit vom Flachpaket überstehenden Wicklungsdrähten, die wenigstens einen Wicklungsüberhang bilden, hergestellt ist, wobei wenigstens ein erfindungsgemäßes Isolierelement zur Isolierung der Wicklungsdrähte verbaut ist. Durch die Verwendung von erfindungsgemäßen Isolierelementen wird eine hohe Isolationssicherheit für die elektrische Maschine erhalten.

Die Erfindung wird nachfolgend anhand von in der Zeichnung dargestellten Ausführungsbeispielen näher erläutert.

Es zeigen:
Figur 1 die Seitenansicht eines Flachpakets mit in Nuten einliegenden Wicklungen,
Figur 2 die Draufsicht auf das in Figur 1 dargestellte Flachpaket ohne einliegende Statorwicklung,
Figur 3 einen Querschnitt eines aus einem Flachpaket durch Rundbiegen hergestellten Stators mit einliegender Statorwicklung,
Figur 4 einen Teilquerschnitt eines Stators mit einliegender Statorwicklung, der aus einem Flachpaket, wie es in Figur 1 dargestellt ist, durch Rundbiegen hergestellt wurde,
Figur 5 bis Figur 7 unterschiedliche Ausführungsformen von Isolierelementen, die als Isolationsclip zum Aufstecken auf Wicklungsüberhänge einer Statorwicklung wie bei Figur 1 und Figur 4 verwendbar sind.

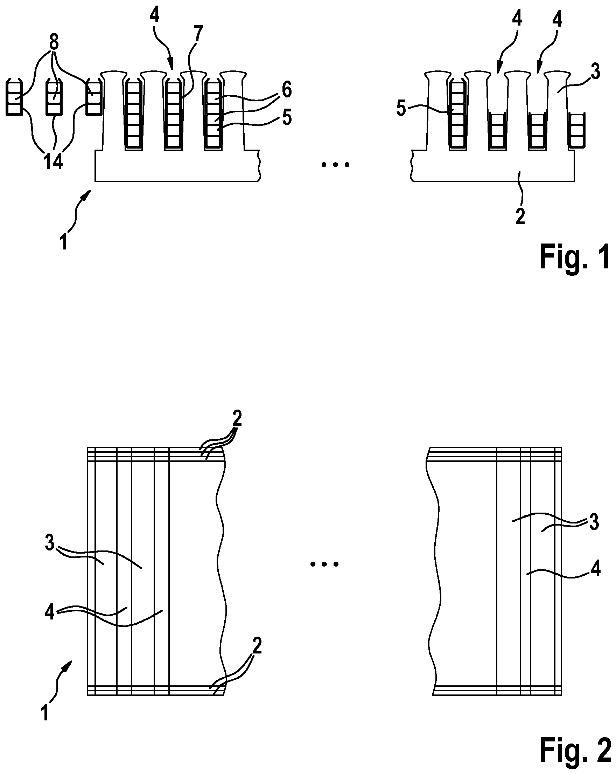

Figur 1 zeigt in Seitenansicht ein Flachpaket 1, welches aus einer Vielzahl von hintereinander angeordneten Blechlamellen 2 besteht, von denen in Figur 1 nur die vorderste Blechlamelle 2 ersichtlich ist. Das Flachpaket 1 besitzt im Abstand angeordnete Zähne 3, sodass zwischen den Zähnen 3 Nuten 4 zur Aufnahme einer Statorwicklung 5 vorhanden sind. Die Statorwicklung 5 besteht aus einer Vielzahl von Wicklungsdrähten 6, die in den Nuten 4 von einer Nutisolation 7 umgeben und dadurch gegenüber den Blechlamellen 2 elektrisch isoliert sind.

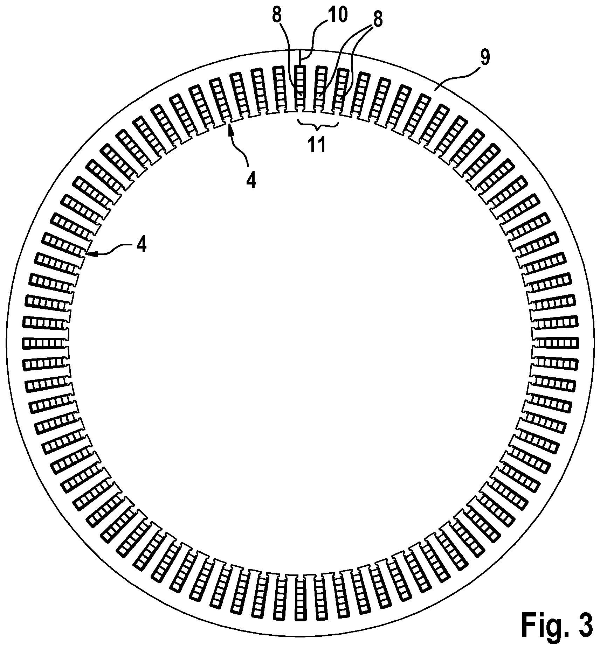

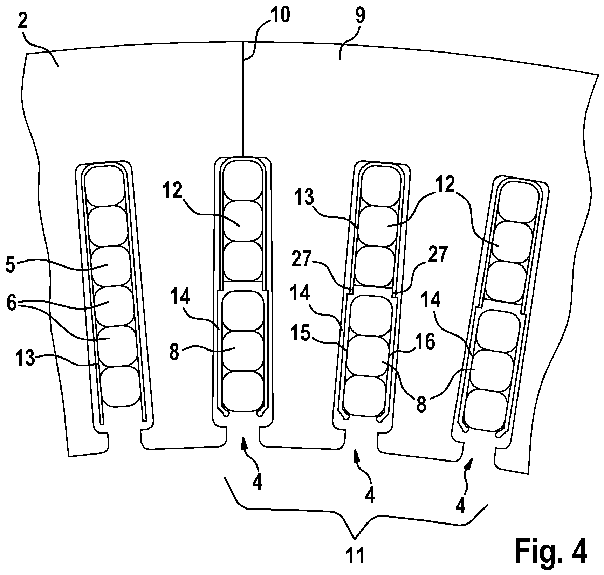

In Figur 1 besitzt die Statorwicklung 5 drei Wicklungsüberhänge 8, die in die am rechten Ende von Figur 1 noch teilweise freigebliebenen Nuten 4 eingesetzt werden, wenn das Flachpaket zu einem zylindrischen Stator, wie er in Figur 3 dargestellt ist, gebogen wird. In der Teilansicht von Figur 4 ist der Bereich des rundgebogenen Stators 9 vergrößert dargestellt, in welchem die Wicklungsüberhänge 8 in entsprechenden Nuten 4 eingesetzt sind.

Die Draufsicht von Figur 2 zeigt insbesondere, dass das Flachpaket 1 von Figur 1 aus einer Vielzahl von Blechlamellen 2 besteht, die hier nur in den Randbereichen zeichnerisch angedeutet sind. In der Draufsicht von Figur 2 sind auch die Zähne 3 und die dazwischen befindlichen Nuten 4 des Flachpakets 1 ersichtlich.

Bei dem in Figur 3 dargestellten Stator 9 sind die in den Nuten 4 einliegenden Isolierelemente der Statorwicklung nicht im Detail ersichtlich. Da der Stator 9 aus einem Flachpaket 1, wie es in den Figuren 1 und 2 dargestellt ist, durch Rundbiegen hergestellt wurde, ergibt sich eine Stoßstelle 10, an der sich die beiden Enden des Flachpakets 1 berühren. Im daran angrenzenden Bereich 11 werden die Wicklungsüberhänge 8 in die entsprechenden Nuten 4 eingesetzt.

Der an die Stoßstelle 10 angrenzende Bereich 11 ist in Figur 4 vergrößert dargestellt. In den an die Stoßstelle 10 angrenzenden Bereich 11 sind die Wicklungsüberhänge 8 in die Nuten 4 eingesetzt, und zwar zusammen mit Wicklungsteilen 12 der Statorwicklung 5.

Die Wicklungsdrähte 6 der Statorwicklung 5 sind durch Nutisolationen 13 gegenüber den Blechlamellen 2 des Stators 9 elektrisch isoliert. Eine derartige Nutisolation 13 ist grundsätzlich bekannt.

Die Wicklungsüberhänge 8 werden bereits am noch ungebogenen Flachpaket 1, wie es in Figur 1 und Figur 2 dargestellt ist, mit einem speziellen Isolierelement 14 versehen, welches als aufsteckbarer Isolationsclip mit elastisch aufweitbaren Schenkeln 15, 16 ausgebildet ist.

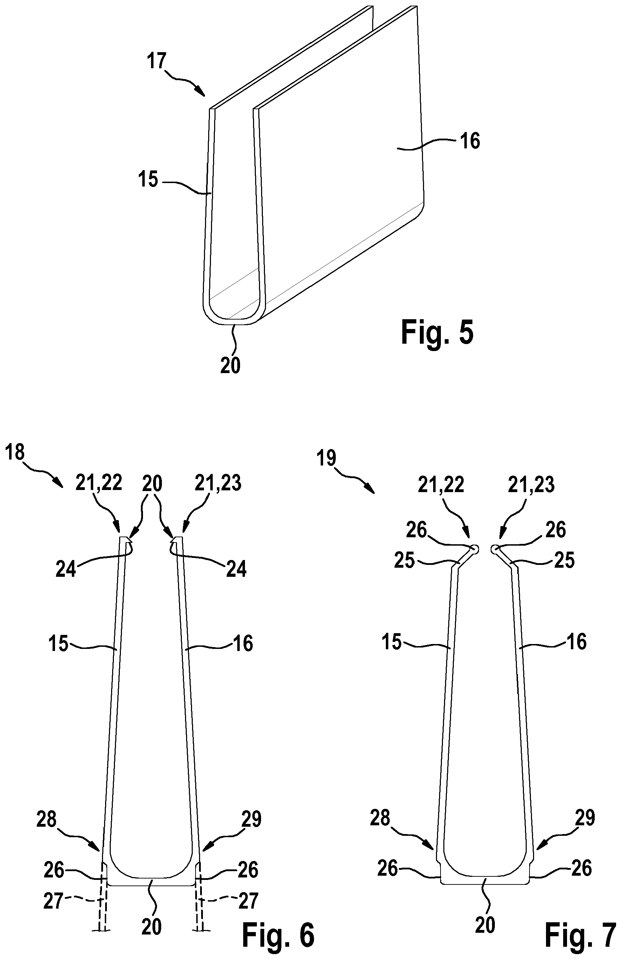

Unterschiedliche Ausführungen erfindungsgemäßer Isolationsclips 17, 18, 19 sind in den Figuren 5 bis 7 dargestellt.

In Figur 5 ist eine perspektivische Ansicht eines Isolationsclips 17 angegeben, der in spitzem Winkel zueinander verlaufende Schenkel 15, 16 hat, die federelastisch aufweitbar sind. Ein gerundeter Boden 20 verbindet die beiden Schenkel 15, 16. Am freien Ende seiner seitlichen Schenkel 15, 16 hat der Isolationsclip 17 im entspannten Zustand eine geringere Öffnungsweite als die Dicke eines zwischen die Schenkel 15, 16 einzusetzenden Wicklungsüberhangs 8. Der Isolationsclip 17 wird zum Aufstecken auf einen Wicklungsüberhang 8 elastisch aufgeweitet und sitzt dann selbstklemmend am jeweiligen Überhang 8 fest.

Um die selbstklemmende Befestigung zu unterstützen, besitzt der in Figur 6 dargestellte Isolationsclip 18 ebenso wie der in Figur 7 dargestellte Isolationsclip 19 Halteelemente 21 an den freien Enden 22, 23 der Schenkel 15, 16. Bei dem Isolationsclip 18 sind die Halteelemente 21 als nach innen gerichtete Randvorsprünge 24 ausgebildet, während beim Isolationsclip 19 die Halteelemente 21 als im Winkel zueinander abstehende Stege 25 ausgebildet sind, an deren Enden verstärkte gerundete Ränder 26 vorgesehen sind.

Bei den Isolationsclips 18, 19 sind beidseitig entlang des Bodens 20 Aussparungen 26 vorgesehen, in die freie Enden von angrenzenden Nutisolationen 13 eingreifen können. In Figur 4 sind derartige freie Enden 27 der Nutisolation 13 ersichtlich. In Figur 6 sind die freien Enden 27 einer angrenzenden Nutisolation 13 mit unterbrochenen Linien angedeutet.

Bevorzugte Ausführungsformen zeigen die Figuren 6 und 7, die jeweils einen Isolationsclip 18, 19 im Querschnitt zeigen. Die Übergangsbereiche 28, 29 zwischen den Schenkeln 15, 16 zum jeweiligen Boden 20 sind verstärkt ausgebildet, wodurch sich gegenüber dem Ausführungsbeispiel von Figur 5 eine verstärkte Klemmfunktion für die Isolationsclips 18, 19 ergibt.

Es wird noch angemerkt, dass die Isolationsclips 17 bis 19 vorzugsweise aus einem elektrisch isolierenden Kunststoffmaterial, beispielsweise aus Polyethylen, hergestellt sind.

## Patentansprüche

1. Isolierelement für die Statorwicklung (5) einer elektrischen Maschine, bei der der Stator (9) aus einem Flachpaket (1) mit darin einliegender Statorwicklung (5) und mit vom Flachpaket (1) überstehenden Wicklungsdrähten (6), die wenigstens einen Wicklungsüberhang (8) bilden, derart hergestellt ist, dass Wicklungsdrähte (6) vor einem Rundbiegen von einem Ende des Flachpakets (1) als der Wicklungsüberhang (8) abstehen und im Zuge des Rundbiegens des Flachpakets (1) in Nuten (4) in einem gegenüberliegenden Ende des Flachpakets (1) einsetzbar sind, **dadurch gekennzeichnet, dass**
das Isolierelement (14) ein auf die vom Flachpaket (1) abstehenden Wicklungsdrähte (6) des Wicklungsüberhangs (8) aufsteckbarer Isolationsclip (18, 19) mit im Wesentlichen U-förmigem Querschnitt ist, der federelastische Seitenschenkel (15, 16) hat,
dass der Isolationsclip (18, 19) am freien Ende seiner seitlichen Schenkel (15, 16) im entspannten Zustand eine geringere Öffnungsweite hat als die Dicke des zwischen die Schenkel (15, 16) einzusetzenden Wicklungsüberhangs (8), und
dass außen an jedem der beiden Schenkel (15, 16) im Übergangsbereich (28, 29) zu einem die beiden Schenkel (15, 16) verbindenden Boden (20) eine Aussparung (26) ausgebildet ist, in die die freien Enden (27) der Schenkel einer angrenzenden Nutisolation (13), die in der selben Nut (4) eines Stators (9) einliegt, einfügbar sind.

2. Isolierelement nach Anspruch 1, **dadurch gekennzeichnet, dass** die Schenkel (15, 16) von einem beide Schenkel (15, 16) verbindenden Boden (20) abragen, der im Übergangsbereich (28, 29) vom Boden (20) zum jeweiligen Schenkel (15, 16) verstärkt ist.

3. Isolierelement nach einem der vorhergehenden Ansprüche, **dadurch gekennzeichnet, dass** der auf einen Wicklungsüberhang (8) aufgesteckte Isolationsclip (18, 19) selbstklemmend die in ihm einliegenden Wicklungsdrähte (6) umgreift.

4. Isolierelement nach einem der vorhergehenden Ansprüche, **dadurch gekennzeichnet, dass** an den beiden freien Enden der Schenkel (15, 16) des Isolationsclips (18, 19) zueinander ausgerichtete Halteelemente (21) angeformt sind.

5. Isolierelement nach Anspruch 4, **dadurch gekennzeichnet, dass** die Halteelemente (21) als Randvorsprung (24) ausgebildet sind.

6. Isolierelement nach Anspruch 4, **dadurch gekennzeichnet, dass** die Halteelemente (21) als im Winkel zueinander abstehende Stege (25) ausgebildet sind.

7. Isolierelement nach einem der vorhergehenden Ansprüche, **dadurch gekennzeichnet, dass** die freien Enden der Schenkel (15, 16) als verstärkte gerundete Ränder (26) ausgebildet sind.

8. Isolierelement nach einem der vorhergehenden Ansprüche, **dadurch gekennzeichnet, dass** der Isolationsclip (18, 19) aus einem elektrisch isolierenden Kunststoff als Spritzgussteil hergestellt ist.

9. Isolierelement nach einem der vorhergehenden Ansprüche 1 bis 7, **dadurch gekennzeichnet, dass** der Isolationsclip (18, 19) aus einem elektrisch isolierenden Kunststoff als Extrusionsteil hergestellt ist.

10. Isolierelement nach einem der vorhergehenden Ansprüchel bis 7, **dadurch gekennzeichnet, dass** der Isolationsclip (18, 19) aus einem elektrisch isolierenden Kunststoff mittels eines additiven Fertigungsverfahrens hergestellt ist.

11. Isolierelement nach einem der vorhergehenden Ansprüche, **dadurch gekennzeichnet, dass** um die Wicklungsdrähte (6) eine Isolierfolie gelegt ist, die der Isolationsclip (18, 19) an den Wicklungsdrähten (6) festklemmt.

12. Elektrische Maschine, bei der der Stator (9) aus einem Flachpaket (1) mit darin einliegender Statorwicklung (5) und mit vom Flachpaket (1) überstehenden Wicklungsdrähten (6), die wenigstens einen Wicklungsüberhang (8) bilden, derart hergestellt ist, dass Wicklungsdrähte (6) vor einem Rundbiegen von einem Ende des Flachpakets (1) als der Wicklungsüberhang (8) abstehen und im Zuge des Rundbiegens des Flachpakets (1) in Nuten (4) in einem gegenüberliegenden Ende des Flachpakets (1) einsetzbar sind, **dadurch gekennzeichnet, dass** wenigstens ein Isolierelement nach einem der vorhergehenden Ansprüche verbaut ist.

## Claims

1. Isolating element for the stator winding (5) of an electrical machine, in which the stator (9) in form of a flat packing (1) comprising the stator winding (5) lying therein and winding wires (6) projecting beyond the flat packing (1) and forming at least one winding overlap (8), is manufactured in such a way that winding wires (6) prior to a circular bending project from one end of the flat packing (1) as the winding overlap (8) and are able to be inserted in grooves (4) in an opposite end of the flat packing (1) when the flat packing (1) is subjected to circular bending, **characterized in that**
the isolating element (14) is an isolating clip (18, 19) having a substantially U-shaped cross-section which is able to be plugged onto the winding wires (6) of the winding overlap (8) projecting from the flat packing (1) and having spring-elastic side legs (15, 16),
the isolating clip (18, 19) has a smaller opening width at the free end of its side legs (15, 16) in the relaxed state relative to the thickness of a winding overlap (8) to be inserted between the legs (15, 16), and
a recess (26) is formed on the outside of each of the two legs (15, 16) in a transition region (28, 29) with respect to a base (20) connecting the two legs (15, 16), into which recess the free ends (27) of the legs of an adjacent groove isolation (13), which lies in the same groove (4) of a stator (9), are able to be inserted.

2. Isolating element according to claim 1, **characterized in that** the legs (15, 16) project from a base (20) connecting the two legs (15, 16), wherein the base (20) is reinforced in the transition region (28, 29) from the base (20) to the respective leg (15, 16).

3. Isolating element according to any one of the preceding claims, **characterized in that** the isolating clip (18, 19), which is plugged onto a winding overlap (8), reaches around the winding wires (6) lying in it in a self-clamping manner.

4. Isolating element according to any one of the preceding claims, **characterized in that** holding elements (21) aligned with respect to each other are integrally formed on the two free ends of the legs (15, 16) of the isolating clip (18, 19).

5. Isolating element according to claim 4, **characterized in that** the holding elements (21) are formed as an edge projection (24).

6. Isolating element according to claim 4, **characterized in that** the holding elements (21) are formed as bars (25) projecting at an angle to each other.

7. Isolating element according to any one of the preceding claims, **characterized in that** the free ends of the legs (15, 16) are formed as reinforced rounded edges (26).

8. Isolating element according to any one of the preceding claims, **characterized in that** the isolating clip (18, 19) is manufactured of an electrically isolating plastic as an injection-molded part.

9. Isolating element according to any one of the preceding claims 1 to 7, **characterized in that** the isolating clip (18, 19) is manufactured of an electrically isolating plastic as an extrusion part.

10. Isolating element according to one of the preceding claims 1 to 7, **characterized in that** the isolating clip (18, 19) is manufactured of an electrically isolating plastic by means of an additive manufacturing process..

11. Isolating element according to any one of the preceding claims, **characterized in that** an isolating foil is arranged around the winding wires (6), which isolating foil is fixed by the isolating clip (18, 19) to the winding wires (6).

12. Electrical machine, in which the stator (9) in form of a flat packing (1) comprising the stator winding (5) lying therein and winding wires (6) projecting beyond the flat packing (1) and forming at least one winding overlap (8) is manufactured in such a way that winding wires (6) prior to a circular bending project from one end of the flat packing (1) as the winding overlap (8) are able to be inserted in grooves (4) in an opposite end of the flat packing (1) when the flat packing (1) is subjected to circular bending, **characterized in that** at least one isolating element according to any one of the preceding claims is incorporated.

## Revendications

1. Élément isolant pour l'enroulement statorique (5) d'une machine électrique, dans lequel le stator (9) est fabriqué à partir d'un empilement plat (1) avec l'enroulement statorique (5) inséré dans celui-ci et des fils d'enroulement (6) formant au moins une partie d'enroulement en porte-à-faux (8) et faisant saillie à partir de l'empilement plat (1), de telle sorte que les fils d'enroulement (6) font saillie, avant un cintrage, à partir d'une extrémité de l'empilement plat (1) sous forme de partie d'enroulement en porte-à-faux (8) et peuvent, au cours du cintrage de l'empilement plat (1), être insérés dans des rainures (4) dans une extrémité opposée de l'empilement plat (1), **caractérisé en ce que**
l'élément isolant (14) est un clips d'isolation (18, 19) pouvant être accroché aux fils d'enroulement (6) de la partie d'enroulement en porte-à-faux (8) faisant saillie à partir de l'empilement plat (1), lequel clips d'isolation a une section transversale sensiblement en forme de U ayant une branche latérale élastique (15, 16),
à l'état relâché, le clips d'isolation (18, 19) a, au niveau de l'extrémité libre de sa branche latérale (15, 16), une largeur d'ouverture inférieure à l'épaisseur de la partie d'enroulement en porte-à-faux (8) à insérer entre les branches (15, 16), et
à l'extérieur, un évidement (26) est formé sur chacune des deux branches (15, 16), dans la zone de transition (28, 29) vers un fond (20) reliant les deux branches (15, 16), évidement dans lequel peuvent être insérées les extrémités libres (27) des branches d'une isolation de rainure (13) adjacente qui s'engage dans la même rainure (4) d'un stator (9) .

2. Élément isolant selon la revendication 1, **caractérisé en ce que** les branches (15, 16) font saillie à partir d'un fond (20) reliant les deux branches (15, 16), lequel fond est renforcé dans la zone de transition (28, 29) du corps (20) jusqu'à chaque branche (15, 16).

3. Élément isolant selon l'une des revendications précédentes, **caractérisé en ce que** le clips d'isolation (18, 19) enfiché sur une partie d'enroulement en porte-à-faux (8) s'engage de manière auto-serrante autour des fils d'enroulement (6) placés dans celui-ci.

4. Élément isolant selon l'une des revendications précédentes, **caractérisé en ce que** des éléments de retenue (21) dirigés l'un vers l'autre sont formés sur les deux extrémités libres des branches (15, 16) du clips d'isolation (18, 19) .

5. Élément isolant selon la revendication 4, **caractérisé en ce que** les éléments de retenue (21) sont configurés sous la forme d'un rebord saillant (24).

6. Élément isolant selon la revendication 4, **caractérisé en ce que** les éléments de retenue (21) sont configurés sous la forme de pattes inclinées (25) faisant saillie l'une par rapport à l'autre.

7. Élément isolant selon l'une des revendications précédentes, **caractérisé en ce que** les extrémités libres des branches (15, 16) sont configurées sous forme de rebords arrondis renforcés (26).

8. Élément isolant selon l'une des revendications précédentes, **caractérisé en ce que** le clips d'isolation (18, 19) en matière plastique électriquement isolante est fabriqué sous forme de pièce moulée par injection.

9. Élément isolant selon l'une des revendications 1 à 7 précédentes, **caractérisé en ce que** le clips d'isolation (18, 19) en matière plastique électriquement isolante est fabriqué sous forme de pièce extrudée.

10. Élément isolant selon l'une des revendications 1 à 7 précédentes, **caractérisé en ce que** le clips d'isolation (18, 19) en matière plastique électriquement isolante est fabriqué au moyen d'un procédé de fabrication additive.

11. Élément isolant selon l'une des revendications précédentes, **caractérisé en ce qu'**un film isolant est posé autour des fils d'enroulement (6), lequel film isolant serre le clips d'isolation (18, 19) sur les fils d'enroulement (6) .

12. Machine électrique, dans laquelle le stator (9) est fabriqué à partir d'un empilement plat (1) avec un enroulement statorique (5) inséré dans celui-ci et des fils d'enroulement (6) formant au moins une partie d'enroulement en porte-à-faux (8) faisant saillie à partir de l'empilement plat (1), de telle sorte que les fils d'enroulement (6) font saillie, avant le cintrage, à partir d'une extrémité de l'empilement plat (1) sous forme de partie d'enroulement en porte-à-faux (8) et peuvent, au cours du cintrage de l'empilement plat (1), être insérés dans des rainures (4) dans une extrémité opposée de l'empilement plat (1), **caractérisée en ce qu'**au moins un élément isolant est construit selon l'une des revendications précédentes.
